Europäisches Patentamt

European Patent Office

Office européen des brevets

(19)

(11) Publication number: **0 217 752**
**B1**

(12)

# EUROPEAN PATENT SPECIFICATION

(45) Date of publication of the patent specification:
**18.07.90**

(21) Application number: **86830211.8**

(22) Date of filing: **17.07.86**

(51) Int. Cl.⁵: **B60H 1/24**

(54) **Air-conditioning device for passenger compartments of motor vehicles.**

(30) Priority: **03.10.85 IT 5389285 U**

(43) Date of publication of application:
**08.04.87 Bulletin 87/15**

(45) Publication of the grant of the patent:
**18.07.90 Bulletin 90/29**

(84) Designated Contracting States:
**DE FR GB SE**

(56) References cited:
**EP-A-0 051 086**
**EP-A-0 061 843**
**WO-A-81/01963**

(73) Proprietor: **FIAT AUTO S.p.A., Corso Giovanni Agnelli 200, I-10135 Torino(IT)**

(72) Inventor: **Del Monte, Franco, Via Principe d'Acaja 38, I-10138 Torino(IT)**

(74) Representative: **Buzzi, Franco et ai, c/o Jacobacci-Casetta & Perani S.p.A. Via Alfieri, 17, I-10121 Torino(IT)**

## Description

The present invention relates generally to air-conditioning systems for passenger compartments of motor vehicles.

In such air-conditioning systems, air outlet openings are usually provided for cooling or heating the passenger compartment of the vehicle, these normally being located in the zone of the dashboard or at least in the front part of the passenger compartment itself, which obviously favours the occupants of the front seats but penalises the occupants of the rear seats. This disadvantage is most noticeable in the case of summer ventilation since the cool air flow leaving the openings of the air-conditioning system reaches the rear seat after having already been warmed during its passage through the front part of the passenger compartment.

It is known from EP-A 0 061 843 to incorporate an electric fan in the back of a front seat and arranged to generate an air flow outlet through an opening. Such an opening is provided in the front part of the seat, so that in use the air is directed towards the head of the occupant of the front seat.

It is also known from WO-A 8 101 963 to incorporate an electric fan in the back of a rear seat and arranged to generate an air flow outlet through an opening provided in the rear part of the rear seat, so that in use the air is directed behind the rear seat.

None of these prior solutions is suitable for giving a solution to the above-mentioned problem.

The object of the present invention is to avoid this disadvantage and to ensure an effective air-conditioning air flow even to the rear-seat passengers of motor vehicles.

According to the invention this object is achieved by means of an air-conditioning device such as defined in claim 1.

The device according to the invention may be fitted directly to the top of the back of the front seat of a motor vehicle or may be incorporated in a head-rest mounted on the back of the front seat, and enables the provision of an effective air flow usable by the occupants of the rear seats in use.

The fan incorporated in the back of the seat or in the head-rest is naturally provided with an independent electric motor which is preferably operable by means of a push-button fitted to the back itself or to the head-rest.

Further characteristics of the invention will become clearer from the description which follows with reference to the appended drawings, provided purely by way of non-limiting example, in which:

Figure 1 is a schematic perspective view showing the interior of the passenger compartment of a vehicle in which one of the front seats is provided with a device according to the invention, and

Figure 2 is a schematic sectional view on an enlarged scale, taken on the line II–II of Figure 1.

With reference to the drawings, a head-rest, generally indicated 1, is mounted on the top of the back B of a front seat S of a motor vehicle.

According to the invention, the head-rest incorporates an electric fan 3 which draws air from one or more openings 9 formed in the base and/or the sides of the head-rest and directs it under pressure towards the rear seats through an opening 6 disposed in the rear side 7 of the head-rest 1.

Since the head-rest 1 is usually adjustable in height and inclination, the flow produced by the electric fan 3 may consequently be regulated and oriented in dependence on the requirements of the rear passengers. Furthermore, the opening 6, which normally has a grille, may have movable flow deflectors, not illustrated but conventional in the field of motor vehicle air-conditioning systems.

Naturally, the motor of the electric fan 3 will be connected to the electrical supply circuit of the vehicle. The motor is normally activated, and the electric fan 3 thus operated, by means of a switch 8 located at the rear 7 of the head-rest 1 alongside the opening 6. Alternatively, the electric fan 3 may be operated by means of a remote control located on the dashboard of the vehicle or in any convenient zone of the rear part of the passenger compartment.

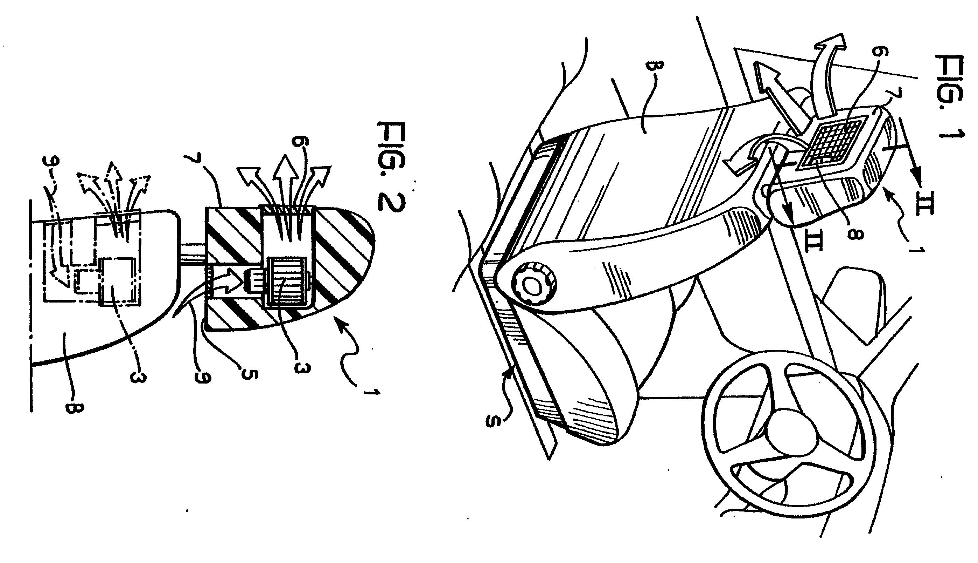

Although the example illustrated refers to the application of the fan 3 to a head-rest, it is clear that this fan and its intake and delivery openings could be disposed to advantage directly in the back of a front seat, in the manner indicated in broken outline in Figure 2, or could be fitted equally well to a rear seat in order to facilitate the de-misting and/or defrosting of the rear window.

## Claims

1. Air-conditioning device for passenger compartments of motor vehicles, comprising an electric fan (3) incorporated in the back of a front seat (S) and arranged to generate an air flow outlet through an opening (6), characterised in that said opening (6) is provided in the rear part (7) of the seat-back (B) so that the air is directed in use to the rear seat.

2. Device according to Claim 1, characterised in that it is fitted in a head-rest (1) mounted at the top of the seat-back (B).

## Patentansprüche

1. Klimatisierungsvorrichtung für Fahrgasträume von Kraftfahrzeugen mit einem in der Rückseite eines Vordersitzes (S) eingebauten elektrischen Ventilator (3), der so angeordnet ist, daß er durch eine Auslaßöffnung (6) einen Luftstrom erzeugt, dadurch gekennzeichnet, daß diese Auslaßöffnung (6) in dem rückseitigen Teil (7) der Rückenlehne (B) angeordnet ist, so daß der Luftstrom im Betrieb auf den Rücksitz gerichtet ist.

2. Vorrichtung nach Anspruch 1, dadurch gekennzeichnet, daß sie in einer an der Oberseite der Rückenlehne (B) montierten Kopfstütze (1) angeordnet ist.

## Revendications

1. Dispositif de climatisation pour habitacles de véhicules automobiles, comprenant un ventilateur électrique (3) incorporé dans le dossier d'un siège avant (S) et agencé pour engendrer une sortie de flux d'air à travers une ouverture (6), caractérisé en ce que ladite ouverture (6) est prévue dans la partie arrière (7) d'un dossier de siège (B), de sorte que, en utilisation, le flux d'air est dirigé vers le siège arrière.

2. Dispositif selon la revendication 1, caractérisé en ce qu'il est monté dans un appuie-tête (1) monté au sommet du dossier (B) du siège.

FIG. 1

FIG. 2